# FASCICULE DE BREVET EUROPEEN

(11) **EP 1 600 371 B1**
(45) Date de publication et mention de la délivrance du brevet: **27.06.2007**
(21) Numéro de dépôt: 05104474.1
(22) Date de dépôt: 25.05.2005
(51) Int. Cl.: B64C 13/04, B64C 13/50, B64C 9/32

(54) **Système de commande des aerofreins d'un avion**
Steuersystem für die Bremsklappen eines Flugzeugs
Control system for aircraft airbrakes

(30) Priorité: 28.05.2004 FR 0451062
(43) Date de publication de la demande: 30.11.2005
(73) Titulaire: AIRBUS France, 31060 Toulouse (FR)
(72) Inventeur: Beaujard, Jean-Philippe, F-31830 Plaisance du Touch (FR); Audibert, Marc, F-31490 Brax (FR)
(74) Mandataire: Poulin, Gérard

(56) Documents cités:
- US-A- 3 618 880
- US-A- 4 363 098
- US-A- 4 591 113

## Description

### DOMAINE TECHNIQUE

La présente invention concerne un système de commande des aérofreins d'un avion.

### ÉTAT DE LA TECHNIQUE ANTÉRIEURE

Les avions utilisent, pour la plupart, des aérofreins pour accélérer leur descente ou décélérer rapidement. Les aérofreins sont des gouvernes dont l'objectif est d'augmenter la traînée de l'avion, ceci afin d'augmenter son angle de descente.

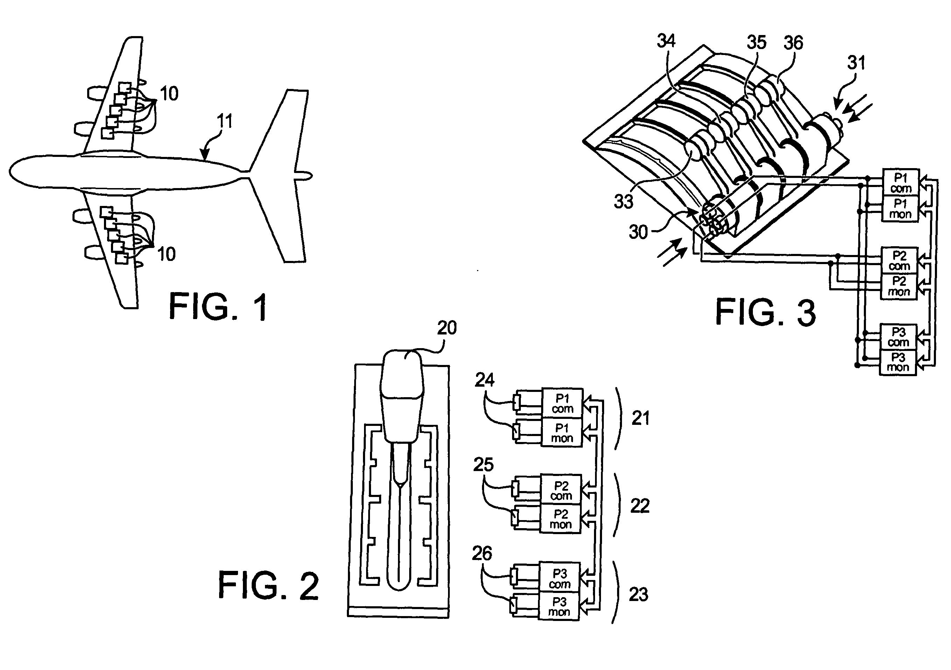

Ces aérofreins peuvent être des « spoilers » 10, illustrés sur la figure 1, qui sont des gouvernes placées sur l'extrados de chaque aile de l'avion 11.

La commande de aérofreins considérée dans la suite, à titre d'exemple, est celle des spoilers. L'extension des aérofreins correspond à une sortie des spoilers. La rétraction des aérofreins correspond à une rentrée des spoilers.

Ces spoilers en se braquant diminuent sensiblement la portance de l'avion et augmentent sensiblement la traînée de l'avion. Afin de compenser la perte de portance, l'avion doit voler sous une incidence plus cabrée et il en résulte une traînée encore accrue.

La commande des spoilers est faite par le pilote, ou le copilote, à l'aide d'un levier, selon son souhait de descendre, de décélérer ou d'accélérer. Cette commande implique une modification des caractéristiques aérodynamiques de l'avion qui peuvent se traduire par une réduction du domaine de vol afin de préserver la sécurité et le confort du vol : par exemple par un choix restreint de vitesses de vol, ou par une manoeuvrabilité réduite.

Les spoilers sont braqués en fonction de la commande exercée par le pilote. A un déplacement du levier de commande correspond, à priori, un braquage pour chaque surface correspondante.

Les spoilers sont par ailleurs utilisés pour d'autres fonctions :
- freinage de l'avion au sol (braquage spécifique),
- roulis (en plus des ailerons lorsque la demande est forte),
- diminution des charges de la voilure par braquage automatique de certaines surfaces en cas de ressource prononcée.

La sortie des spoilers s'accompagne d'une perte de portance. L'avion doit donc soit augmenter l'incidence, soit accélérer. Si l'avion volait auparavant à son incidence maximale, il n'a d'autre choix que d'accélérer. La sortie des spoilers s'accompagne donc d'une réduction du domaine de vol en terme de vitesse.

Un raisonnement semblable peut être mené en ce qui concerne la manoeuvrabilité de l'avion (capacité de virage). Un virage nécessite d'augmenter la portance et donc l'incidence. La sortie des spoilers limite l'incidence disponible et donc la capacité en virage.

Les spoilers deviennent donc une fonction critique pendant certaines procédures par exemple :
- de livraison aérienne : il existe, en effet, deux principaux types de livraison aérienne : Une livraison par gravité et une livraison par extraction. Une livraison par gravité n'utilise pas de parachutes d'extraction pour la sortie des charges hors de l'avion. L'avion doit donc augmenter son inclinaison par rapport à l'horizontale pour que cette extraction puisse avoir lieu. Le pilote peut contrôler une telle attitude d'inclinaison à l'aide de la commande des aérofreins parce que la diminution de sustentation générée par les aérofreins est contrebalancée par une augmentation de l'attitude d'inclinaison.
- de ravitaillement en vol : les aérofreins peuvent être utilisés pour contrôler de manière continue le rendez-vous entre un avion ravitailleur et un avion ravitaillé.

Au cours de telles procédures, un emballement non détecté (extension des spoilers) pendant une approche rapide peut être catastrophique.

Un premier objet du système de l'invention est de pallier un tel inconvénient.

Selon les techniques de l'art connu, pour couvrir les contraintes de sécurité, chaque commande des spoilers doit être acquise par trois calculateurs. Lorsque l'espace disponible est important, comme illustré sur la figure 2 la commande extension respectivement la commande extraction de ces spoilers, effectuées à l'aide d'un levier 20, peuvent être constituées de trois étages électriques 21, 22 et 23 séparés afin qu'un étage en panne n'affecte pas les deux autres.

Ce levier 20, dans les avions classiques, est relié aux calculateurs de commande de vol primaires. Des potentiomètres peuvent donner une valeur analogique fonction de la position de ce levier qui correspond à l'efficacité d'aérofreinage.

Dans un dispositif de l'art connu trois paires de potentiomètres 24, 25 et 26 sont utilisés. Chaque paire est dédiée à un calculateur de commande de vol primaire, l'un étant affecté à l'unité de commande (P1com, P2com, ou P3com), l'autre étant connecté à l'unité de surveillance (P1mon, P2mon, ou P3mon). Chaque calculateur alimente chacun de ces potentiomètres.

Dans un avion l'espace vide dans la manette de gaz est limité et il n'est donc pas possible d'utiliser de tels potentiomètres.

Un second objet de l'invention est de résoudre un tel problème en créant une fonction compatible des exigences de sécurité citées ci-dessus, dans l'espace réduit de la manette des gaz.

### EXPOSÉ DE L'INVENTION

La présente invention concerne un système de commande des aérofreins, par exemple des spoilers, d'un avion, qui comprend des moyens de commande d'un mode de fonctionnement continu ou d'un mode de fonctionnement incrémental en fonctionnement nominal des aérofreins et des moyens de commande d'un mode de fonctionnement incrémental en cas de panne.

Selon une autre caractéristique avantageuse, le système de l'invention comprend au moins un ensemble de commande à deux boutons-poussoirs jumeaux. Un premier ensemble peut être disposé sur la manette des gaz coté pilote, et un second ensemble peut être disposé sur la manette des gaz coté copilote.

Dans chaque ensemble de deux boutons-poussoirs, l'actionnement d'un seul bouton-poussoir réalise la commande du mode de fonctionnement incrémental, et l'actionnement des deux boutons-poussoirs réalise la commande du mode de fonctionnement continu.

Au moins deux calculateurs sont reliés chacun à un bouton-poussoir. Les deux étages de calcul de chaque calculateur reçoivent les sorties d'un étage électrique d'un bouton-poussoir.

Dans une variante de fonctionnement, dans chaque ensemble de deux boutons-poussoirs, dans un actionnement simultané des deux boutons-poussoirs le premier bouton-poussoir active un mode de fonctionnement incrémental jusqu'à un certain seuil, ensuite le second bouton-poussoir active un mode de fonctionnement continu.

L'originalité de l'invention vient donc du mode continu qui est utilisé sans panne et du mode incrémental qui est utilisé en cas de panne. Ainsi l'invention reste compatible des exigences de sécurité cités plus haut.

L'originalité de l'invention réside aussi dans l'utilisation de deux boutons-poussoirs jumeaux contenant chacun non pas trois étages mais un seul étage ce qui réduit le volume nécessaire pour une telle commande.

Un tel système permet de commander les aérofreins tant que le pilote appuie sur la commande. Il permet un mode de commande continu sans panne et un mode de commande incrémental compatible d'une panne simple, car un étage électrique continue de fonctionner. Lors d'une panne double, deux étages électriques sont erronés et un étage de calcul est valide. Les calculateurs détectent donc une incohérence et inhibent la fonction aérofreins (il faut alors utiliser les boutons-poussoirs du coté co-pilote si nécessaire). Ce n'est qu'à la troisième panne (ou deux pannes sous MEL (liste d'équipement minimum pour laquelle le décollage de l'avion est autorisé) d'un équipement) que les calculateurs « se trompent » d'interprétation et peuvent commander intempestivement les aérofreins. Un tel cas de figure est extrêmement improbable et reste donc compatible des exigences de sécurité.

### BRÈVE DESCRIPTION DES DESSINS

La figure 1 illustre la position des spoilers sur un avion.

La figure 2 illustre la commande des spoilers dans un système de l'art connu.

La figure 3 illustre le système de commande de l'invention.

Les figures 4 à 16 illustrent plusieurs scénarios de pannes.

### EXPOSE DETAILLE DE MODES DE REALISATION PARTICULIERS

Dans le système de l'invention, le levier de commande 20 des spoilers, utilisé sur les avions civils et illustré sur la figure 2, est remplacé par deux ensembles 30 et 31 de deux boutons-poussoirs disposés sur la manette des gaz 32 de chaque coté de celle-ci c'est-à-dire du coté pilote et du coté copilote, pour pallier au manque de place existant sur le palonnier central des avions.

La manette de gaz 32 est ici formée de quatre leviers 33, 34, 35 et 36, chaque levier correspondant à la commande d'un des quatre moteurs de l'avion, tel qu'illustré sur la figure 1.

Quatre étages électriques, illustrés par des pastilles sur la figure 3, sont utilisés pour chaque ensemble de deux boutons-poussoirs (deux étages électriques correspondant donc à un bouton-poussoir) et aucune alimentation en puissance n'est nécessaire.

Un étage électrique de chaque bouton-poussoir est dédié à deux calculateurs de commande de vol primaire (« Primary Flight Control computer » ou PRIM) du premier coté de l'avion (P1 et P3) et l'autre commutateur est connecté à un calculateur du second coté de l'avion (P2).

Le système de l'invention permet une commande de pilotage sûre des spoilers dont un mauvais fonctionnement pourrait avoir des conséquences catastrophiques.

Contrairement aux systèmes de l'art connu, tel que celui illustré sur la figure 2, qui utilisent une commande à trois étages pour assurer un niveau de sécurité suffisant, le système de l'invention, moyennant un mode de fonctionnement incrémental et un mode de fonctionnement continu, permet d'assurer un tel niveau de sécurité avec deux boutons-poussoirs à un étage. Une telle solution est beaucoup moins encombrante.

Lorsque le pilote, ou le copilote, effectue une commande en utilisant un seul bouton-poussoir le mode de fonctionnement incrémental est utilisé. C'est-à-dire que chaque appui fait augmenter l'amplitude de la commande d'un pas donné.

Lorsque le pilote, ou le copilote, agit (en poussant ou en tirant) sur les deux boutons-poussoirs à la fois, c'est le mode de fonctionnement continu qui est utilisé. L'amplitude de la commande augmente tant que le pilote, ou le copilote, maintient sa commande.

L'invention consiste à envoyer des signaux discrets indiquant que le pilote, ou le copilote, actionne le ou les boutons-poussoirs. Les calculateurs calculent alors la commande correspondante avec une logique spécifique à la portée de l'homme de l'art.

Si l'on analyse plus précisément chacun de ces deux modes de fonctionnement :

### Mode incrémental

Dans ce mode seul un bouton-poussoir est appuyé. Chaque actionnement correspond à un incrément.

Le calculateur correspondant prend en compte la commande sur le front montant du signal.

Un emballement, dans ce mode, est limité à un incrément.

### Mode continu

Dans ce mode chaque actionnement des deux boutons-poussoirs correspond à une extension (ou rétraction) complète et rapide des spoilers.

Le calculateur prend en compte une telle commande lorsque les deux boutons-poussoirs sont appuyés.

Un emballement est alors extrêmement improbable.

Avantageusement, grâce à une telle solution, aucune panne probable n'aboutit à l'embarquement de la commande ni au blocage de la commande. En cas de panne le pilote peut toujours utiliser le mode de fonctionnement incrémental et l'embarquement des spoilers est nécessairement limité.

Les boutons-poussoirs, qui envoient des informations discrètes correspondant à des commandes d'extraction ou de rétraction des spoilers, sont passifs et ne nécessitent aucune alimentation électrique pour fonctionner.

Chaque étage de chaque bouton-poussoir présente deux signaux de sortie électriques qui peuvent être acquis par les calculateurs. Il présente aussi un signal d'entrée qui peut soit être connecté à la masse soit être connecté à une sortie discrète de calculateur.

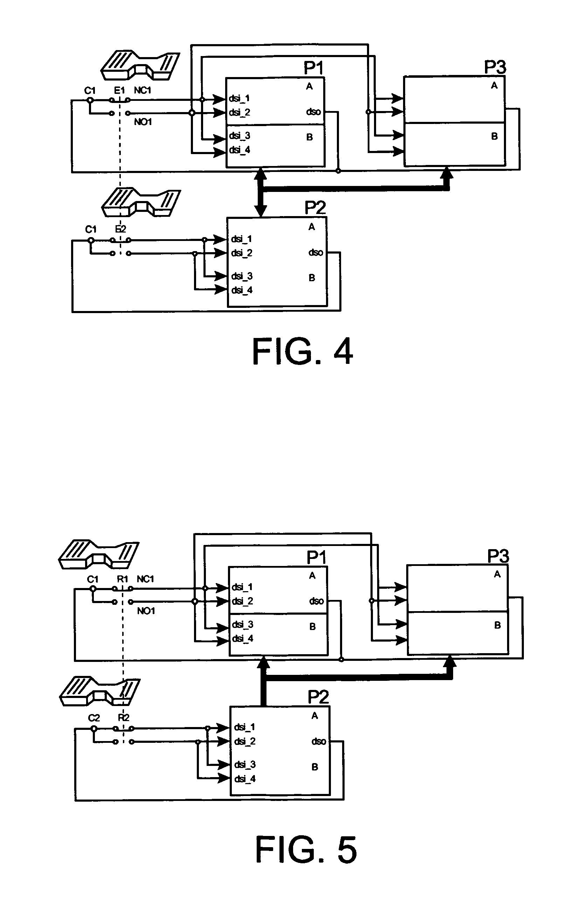

Les deux étages de calcul A et B de chaque calculateur de commande de vol primaire P1, P2 ou P3 reçoivent les deux sorties d'un étage du bouton-poussoir pour une commande d'extension des spoilers, comme illustré sur la figure 4, ou pour une commande de rétraction des spoilers comme illustré sur la figure 5. Chaque calculateur (P1, P2 ou P3) reçoit ainsi directement les signaux de sortie d'un étage d'un bouton-poussoir correspondant (deux signaux électriques sont acquis pour détecter des défauts isolés). De plus les calculateurs (P1, P2, P3) sont reliés entre eux au travers d'un bus par exemple de type ARINC 429.

Aussi longtemps que les deux étages de chaque bouton-poussoir restent cohérents, la commande pilote ou copilote est utilisée comme une commande continue. Les spoilers sont étendus ou rétractés aussi longtemps que le pilote ou le copilote continue à actionner le bouton-poussoir.

Si les deux étages ne sont plus cohérents, alors le calculateur ordonne un seul incrément lorsqu'il détecte un front montant, et la commande continue est perdue, même si le pilote ou le copilote continue à actionner le bouton-poussoir, les spoilers s'étendent ou se rétractent d'une valeur limitée.

Le pilote ou le copilote doit alors laisser le bouton-poussoir revenir à son point de repos pour pouvoir demander un nouvel incrément en poussant ou en tirant.

Si le calculateur P1, P2, ou P3, qui est le maître, perd une commande continue parce qu'une entrée discrète à échoué, il garde le contrôle des spoilers dans le mode incrémental même si l'autre calculateur est en mode continu.

Dans une variante de réalisation, si le pilote, ou le copilote, actionne simultanément les deux boutons-poussoirs, le premier bouton active un mode de fonctionnement incrémental jusqu'à un certain seuil, puis si le pilote, ou le copilote, va plus loin le deuxième bouton active un mode de fonctionnement continu. Dans ce cas les efforts de manoeuvre s'ajoutent (la caractérisation des angles et des efforts de manoeuvre se fait plus tard).

### Scénarios de panne

On va considérer ci-dessous un certain nombre de scénarios de panne auquel peut répondre le système de l'invention.

Il faut distinguer les pannes simples (c'est-à-dire une seule panne) des pannes doubles (deux pannes). Ces dernières ont une probabilité bien plus faible que les premières. L'ordre de grandeur de probabilité d'une panne simple est de 10⁻⁵/heure de vol.

### 1. Effet de panne simples

L'invention permet de garantir qu'il n'y aura pas d'embarquement de commande des spoilers quelle que soit l'origine de la panne. Un embarquement est une commande des spoilers jusqu'à leur butée.

Lorsqu'un calculateur reçoit une seule information en provenance de deux sources possibles, il réalise une commande incrémentale. C'est-à-dire qu'il envoie un ordre limité de mouvement sur les spoilers et non un ordre continu. Aussi quel que soit le temps pendant lequel le pilote appuie sur la commande, l'ordre est limité à une certaine valeur. Pour commander les spoilers plus loin, le pilote doit relâcher le bouton-poussoir puis réappuyer afin d'envoyer à nouveau signal avec un front montant.

Une architecture avec trois calculateurs P1, P2 et P3, comme illustré sur les figures 4 et 5, aboutit forcément à un fonctionnement non symétrique car on ne peut pas accepter pour des raisons de ségrégation électrique (état de l'art en aviation) qu'un calculateur acquiert les deux boutons-poussoirs à la fois.

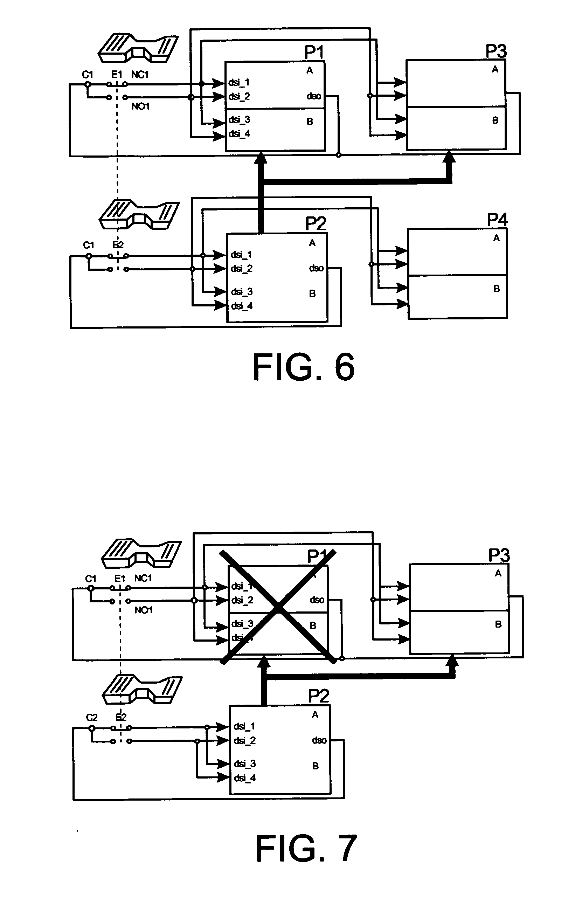

On peut choisir, également, une architecture utilisant quatre calculateurs P1, P2, P3 et P4, comme illustré par exemple sur la figure 6. Une telle architecture rend les choses beaucoup plus symétrique mais nécessite plus de calculateurs à bord de l'avion.

### A. Cas de pannes sans impact sur la commande

Les pannes suivantes n'ont pas d'effet sur la fonction aérofreins. C'est-à-dire que le pilote dispose à la fois du mode incrémental et du mode continu.

La figure 7 illustre une panne au niveau du calculateur P1 qui n'a pas d'effet sur le calculateur P3 : par exemple un circuit ouvert dans l'interface d'acquisition du calculateur du calculateur P1.

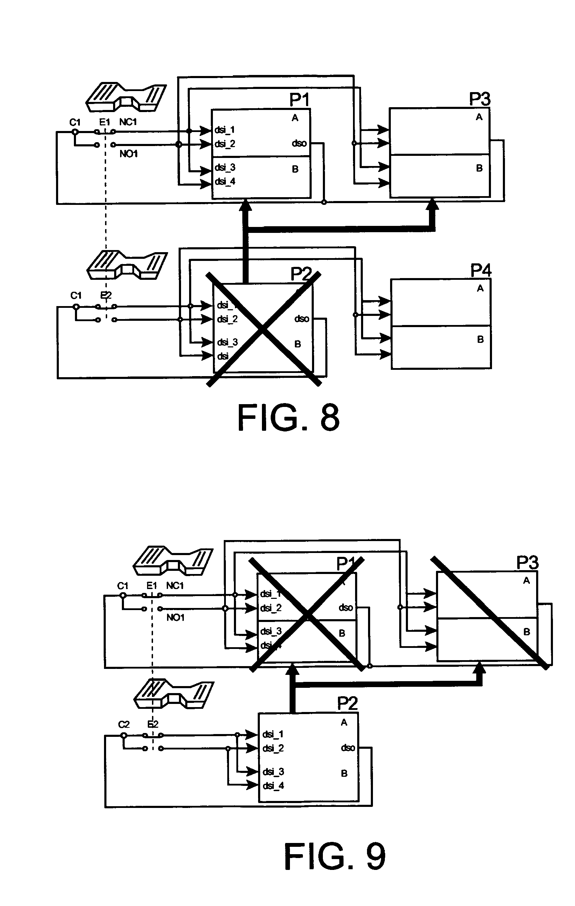

La figure 8 illustre le cas d'une architecture à quatre calculateurs. Une panne au niveau du calculateur P2 n'a pas d'effet sur le calculateur P4 : par exemple un circuit ouvert dans l'interface d'acquisition du calculateur P2.

### B. Cas de pannes entraînant le mode incrémental

La figure 9 illustre un cas de panne du calculateur P1. Dans ce cas on considère que la panne est telle que le calculateur P3 ne peut pas non plus prendre le contrôle du premier bouton-poussoir. Ce sont par exemple des cas de court-circuit au niveau de l'interface du calculateur P1 qui affectent aussi la lecture du calculateur P3.

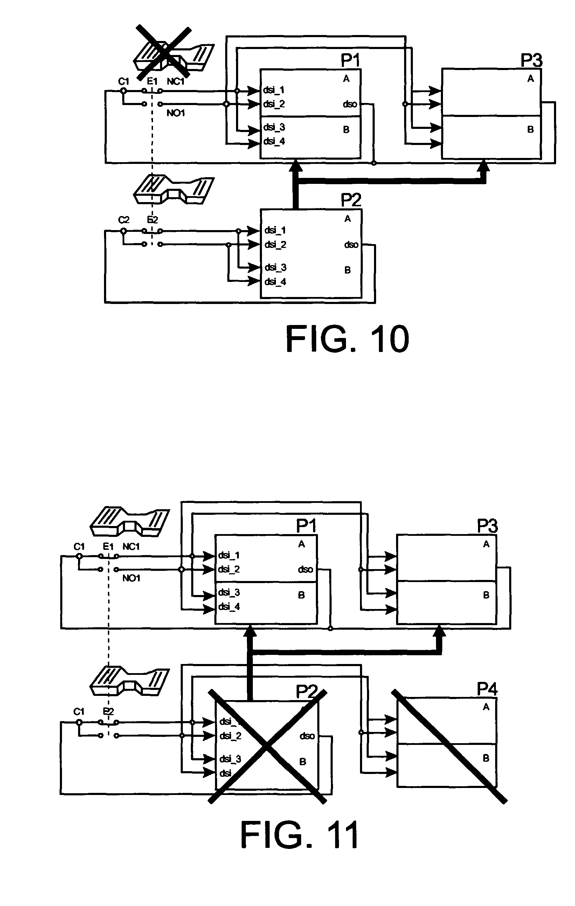

La figure 10 illustre un cas de panne du premier bouton-poussoir.

La figure 11 illustre un cas de panne du second calculateur P2. Dans le cas d'une architecture à quatre calculateurs, on considère que la panne est telle que calculateur P4 ne peut pas non plus prendre le contrôle du second bouton-poussoir. Ce sont, par exemple, des cas de court-circuit au niveau de l'interface du calculateur P2 qui affectent aussi la lecture du calculateur P4.

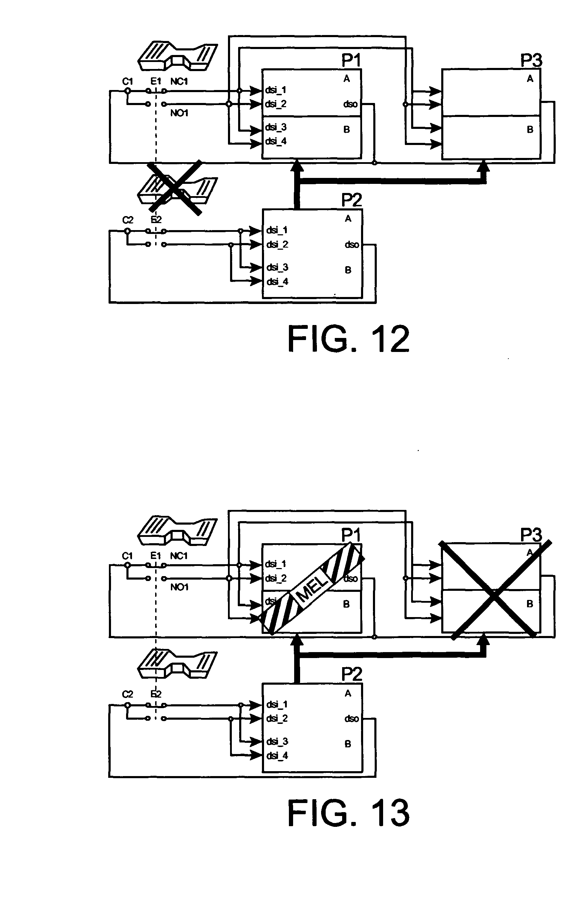

La figure 12 illustre un cas de panne du second bouton-poussoir.

La figure 13 illustre un cas de panne du calculateur P3, sous MEL du calculateur P1. Ce cas correspond donc à une panne intervenant sous « MEL » du calculateur P1 : C'est-à-dire que l'on autorise le décollage de l'avion même si le calculateur P1 est en panne. On voit que ce cas correspond au cas illustré sur la figure 9.

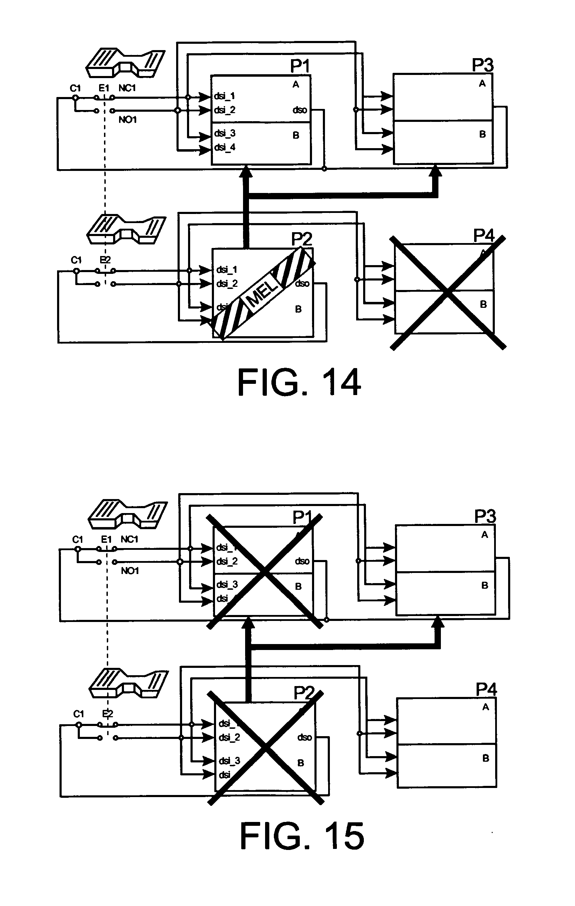

La figure 14 illustre un cas de panne du calculateur P4 sous MEL du calculateur P2. Ce cas, dans une architecture à quatre calculateurs, correspond à une panne intervenant sous MEL du calculateur P2. C'est-à-dire que l'on autorise le décollage de l'avion même si le calculateur P2 est en panne. On voit que ce cas correspond au cas illustré sur la figure 11.

### 2. Effet de pannes doubles

Certaines de ces pannes peuvent conduire à des embarquements donc à des conséquences affectant la sécurité. Mais leur probabilité est lointaine et cette probabilité est compatible avec les objectifs de sécurité.

### A. Cas de double panne sans impact sur la commande

Ce cas correspond à une architecture à quatre calculateurs, comme illustré sur la figure 15.

### B. Cas de double panne entraînant le mode incrémental

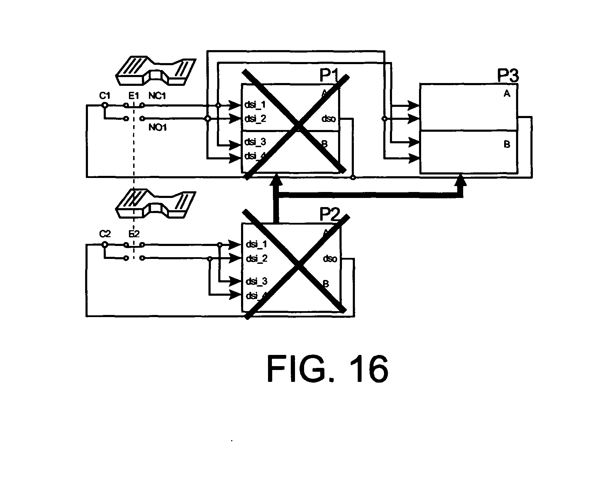

Comme illustré sur la figure 16, le calculateur P3 continue à piloter le second bouton-poussoir en mode incrémental car la panne du calculateur P1 n'entraîne pas d'erreur de lecture sur le calculateur P3.

## Revendications

1. Système de commande des aérofreins d'un avion, qui comprend des moyens de commande d'un mode de fonctionnement continu ou d'un mode de fonctionnement incrémental en fonctionnement nominal des aérofreins et des moyens de commande d'un mode de fonctionnement incrémental en cas de panne.

2. Système selon la revendication 1 comprenant au moins un ensemble (30, 31) de deux boutons-poussoirs jumeaux.

3. Système selon la revendication 1, dans lequel un premier ensemble (30) est disposé sur la manette des gaz coté pilote, et un second ensemble (31) est disposé sur la manette des gaz coté copilote.

4. Système selon la revendication 3, dans lequel, dans chaque ensemble de deux boutons-poussoirs, l'actionnement d'un seul bouton-poussoir réalise la commande du mode de fonctionnement incrémental.

5. Système selon la revendication 3, dans lequel, dans chaque ensemble de deux boutons-poussoirs, l'actionnement de deux boutons-poussoirs réalise la commande du mode de fonctionnement continu.

6. Système selon la revendication 1 comprenant au moins deux calculateurs (P1, P2, P3) reliés chacun à un bouton-poussoir.

7. Système selon la revendication 6, dans lequel les deux étages (A, B) de chaque calculateur (P1, P2, P3) reçoivent les deux sorties d'un étage d'un bouton-poussoir.

8. Système selon la revendication 3, dans lequel, dans chaque ensemble de deux boutons-poussoirs, dans un actionnement simultané des deux boutons-poussoirs le premier bouton-poussoir a un mode de fonctionnement incrémental jusqu'à un certain seuil, ensuite le second bouton-poussoir a un mode de fonctionnement continu.

9. Système selon l'une quelconque des revendications précédentes, dans lequel les aérofreins sont les spoilers de l'avion.

## Claims

1. A control system for aircraft airbrakes, which comprises control means of a continuous operating mode or of an incremental operating mode in nominal operation of the airbrakes and control means of an incremental operating mode in the event of breakdown.

2. The system as claimed in Claim 1 comprising at least one assembly (30, 31) of two twin push buttons.

3. The system as claimed in Claim 1, wherein a first assembly (30) is arranged on the gas throttle lever on the pilot side, and a second assembly (31) is arranged on the gas throttle lever on the co-pilot side.

4. The system as claimed in Claim 3, wherein, in each assembly of two push buttons, the operation of a single push button effects control of the incremental operating mode.

5. The system as claimed in Claim 3, wherein, in each assembly of two push buttons, the operation of two push buttons effects control of the continuous operating mode.

6. The system as claimed in Claim 1 comprising at least two computers (P1, P2, P3) each linked to a push button.

7. The system as claimed in Claim 6, wherein the two stages (A, B) of each computer (P1, P2, P3) receive the two sorties of a stage of a push button.

8. The system as claimed in Claim 3, in which, in each assembly of two push buttons, in simultaneous operation of the two push buttons the first push button has an incremental operating mode up to a certain threshold, then the second push button has a continuous operating mode.

9. The system as claimed in any one of the preceding claims, wherein the airbrakes are the spoilers of the aircraft.

## Patentansprüche

1. System zur Steuerung der Luftbremsen eines Flugzeugs, das Steuermittel eines kontinuierlichen Funktionsmodus oder eines inkrementalen Funktionsmodus bei einem Nennbetrieb der Luftbremsen sowie Steuermittel eines inkrementalen Funktionsmodus im Fall einer Panne aufweist.

2. System nach Anspruch 1, mit mindestens einer Einheit (30,31) aus zwei Zwillings-Druckknöpfen.

3. System nach Anspruch 1, wobei eine erste Einheit (30) an dem Gashebel auf der Pilotenseite angeordnet ist und eine zweite Einheit (31) an dem Gashebel auf der Kopilotenseite angeordnet ist.

4. System nach Anspruch 3, wobei bei jeder Einheit zweier Druckknöpfe die Betätigung eines einzigen Druckknopfs die Steuerung des inkrementalen Funktionsmodus auslöst.

5. System nach Anspruch 3, wobei bei jeder Einheit zweier Druckknöpfe die Betätigung der beiden Druckknöpfe die Steuerung des kontinuierlichen Funktionsmodus auslöst.

6. System nach Anspruch 1, mit mindestens zwei Rechnern (P1,P2,P3), die jeweils mit einem Druckknopf verbunden sind.

7. System nach Anspruch 6, wobei die beiden Stufen (A,B) jedes Rechners (P1,P2,P3) die beiden Ausgangssignale einer Stufe eines Druckknopfs empfangen.

8. System nach Anspruch 3, wobei in jeder Einheit zweier Druckknöpfe bei einer gleichzeitigen Betätigung der beiden Druckknöpfe der erste Druckknopf einen inkrementalen Funktionsmodus bis zu einer bestimmten Schwelle hat, und anschließend der zweite Druckknopf einen kontinuierlichen Funktionsmodus hat.

9. System nach einem der vorangehenden Ansprüche, wobei die Luftbremsen die Spoiler des Flugzeugs sind.
